# EUROPEAN PATENT SPECIFICATION

(11) **EP 0 517 537 B1**
(45) Date of publication and mention of the grant of the patent: **25.11.1998**
(21) Application number: 92305173.4
(22) Date of filing: 05.06.1992
(51) Int. Cl.: C08L 21/00

(54) **Rubber composition**
Kautschukzusammensetzung
Composition de caoutchouc

(30) Priority: 07.06.1991 JP 162436/91
(43) Date of publication of application: 09.12.1992
(73) Proprietor: BRIDGESTONE CORPORATION, Tokyo 104-0031 (JP); Ube Industries, Ltd., Ube-shi, Yamaguchi-ken 755-0052 (JP)
(72) Inventor: Morimoto, Yoshiyuki, Kodaira City, Tokyo (JP); Yamauchi, Koji, Kodaira City, Tokyo (JP); Nagakura, Koichi, c/o Ube Industries, Ltd., Ichihara City, Chiba Pref. (JP); Ishiguchi, Koji, c/o Ube Industries, Ltd., Ichihara City, Chiba Pref. (JP)
(74) Representative: Whalley, Kevin

(56) References cited:
- EP-A- 0 307 341
- EP-A- 0 364 391

## Description

The present invention relates to a rubber composition having a large slip friction resistance and a small specific gravity, and having satisfactory fracture resistance or wear resistance.

With respect to tires as well as other rubber articles, there has been an increasing need for rubber materials having large slip friction resistance under various use conditions while maintaining satisfactory fracture resistance or wear resistance.

On the other hand, there has been an increasing need for lightening rubber articles for environmental reasons.

For such needs, for example, the slip friction resistance is increased by using a styrene-butadiene rubber having a large tan δ and obtained by emulsion polymerization, increasing a charged amount of carbon black and adding a great amount of oil in view of appropriate rubber hardness and practical processability. However, the slip friction resistance currently required cannot be fully obtained by the above compounding conditions. Further, the amount of heat generated inside the rubber article increases under dynamic use conditions to conspicuously lower durability due to degradation of rubber, and the specific gravity of the rubber article becomes greater.

Besides the above method, solution-polymerized styrene-butadiene rubbers have been recently investigated in various ways, and there have been proposed methods of using a solution-polymerized styrene-butadiene rubber having a specific molecular structure or compounding specific fibers or filler into a rubber.

However, although the slip friction resistance can be considerably improved on ordinary roads by specifying the molecular structure of the polymer to be employed, satisfactory slip friction resistance cannot be obtained on ice.

Further, when special fibers or filler are compounded into rubber, improved slip friction resistance can be obtained even on ice. However, since the fibers or filler added act as a foreign material in the rubber, fracture resistance or wear resistance is remarkably deteriorated.

For these reasons, a rubber composition having a large slip friction resistance on roads in any state and a small specific gravity while maintaining satisfactory fracture resistance or wear resistance has not yet been obtained.

Attention is also drawn to the disclosures of EP-A-0364391 and EP-A-0307341. As is described in EP-A-0364391 (page 4, lines 33-35) and EP-A-0307341 (page 3, lines 57-59), the mixing temperature is at least as high as the melting point of the SPBD being utilized, and during the mixing procedure the SPBD powder is fluxed into the rubber with additional desired compounding ingredients.

It is an aim of the present invention to provide a rubber composition having a large slip friction resistance on roads in any state and also a small specific gravity while maintaining satisfactory fracture resistance or wear resistance.

Investigations by the present inventors have revealed that even when interface bonds are formed between rubber and a special particulate compounding additive incorporated into the rubber composition, the thus formed interface bonds are not necessarily sufficient if dynamic external deformation is intermittently inputted, for example in the case of tires.

The inventors have made further investigations to form effective interface bonds between rubber and the particulate material, and found that the above problems can be solved by forming a co-crosslinked structure between the added particulate material and rubber. Based on this discovery, the present invention has been accomplished.

The present invention provides a rubber composition comprising a rubber component and particulates of a crystalline syndiotactic-1,2-polybutadiene resin kneaded and dispersed in said rubber component, wherein said particulates as disposed in the rubber component have an average particle diameter of 1 to 500 µm and a melting point of not less than 110°C, wherein the compounding ratio of the said resin is 5 to 60 parts by weight relative to 100 parts by weight of said rubber component, and wherein a crosslinked structure is formed between the rubber component and the resin during vulcanization, and resin particulates are exposed outside from the surface of the rubber composition.

The particulates of syndiotactic-1,2-polybutadiene resin used in the present invention have an average particle diameter of 1 to 500 µm. If the average particle diameter is less than 1 µm, slip friction resistance aimed at by the present invention cannot be sufficiently improved. On the other hand, if the average particle diameter is more than 500 µm, fracture resistance and wear resistance are unfavourably deteriorated. The average particle diameter of the particulate resin used in the present invention is preferably 8 µm-480 µm, and more preferably 100 µm-480 µm.

The syndiotactic-1,2-polybutadiene resin used in the present invention is in particulate form. The average ratio M between the major axis and the minor axis of the resin particulates is preferably not more than 6, more preferably not more than 4, in the state that the resin is kneaded into the rubber composition. If the resin is used in the form of micron pile fibers, the resin is oriented during processing the rubber mixture, for example rolling or extruding, so that enlargement of coefficient of friction aimed at by the present invention unfavourably depends upon the direction.

Further, such particulates of the syndiotactic-1,2-polybutadiene resin have a melting point of not less than 110°C. The melting point of the particulate resin is preferably 115°C-200°C, and more preferably 120°C-195°C. The syndiotactic-1,2-polybutadiene resin having a melting point of less than 110°C is not preferable, because its crystallinity is low and hardness of the particulates themselves is small. Further, since such particulates are softened or deformed due to internal heat generation under dynamic use conditions, slip friction resistance cannot be improved as desired.

If the ratio of the above syndiotactic-1,2-polybutadiene resin is less than 5 parts by weight relative to 100 parts by weight of the rubber component in the rubber composition, improvement of the slip friction resistance of the resulting rubber article cannot almost be recognized, and contribution to reduction in the specific gravity is small. On the other hand, if the ratio of the syndiotactic-1,2-polybutadiene resin is more than 60 parts by weight, slip friction resistance of the resulting rubber article is improved with reduced specific gravity, whereas fracture resistance and wear resistance of the rubber article are not only largely deteriorated but also processability of the rubber composition is conspicuously deteriorated to make the rubber composition practically unsuitable.

The above syndiotactic-1,2-polybutadiene can be produced according to a process disclosed in Japanese patent publication No. 53-39,917, 54-5,436 or 56-18,005. However, the process of producing the syndiotactic-1,2-polybutadiene used in the present invention is not limited to those in these publication.

In the present invention, the kind of the rubber constituting the rubber composition in which the composite particulates of the syndiotactic-1,2-polybutadiene resin are incorporated is not particularly limited, and ordinarily used rubber may be employed. For example, as the rubber component, natural rubber, polyisoprene rubber, polybutadiene rubber, styrene-butadiene copolymer rubber, butyl rubber, halogenated butyl rubber, and ethylene-propylene diene rubber may be preferably used singly or in combination with each other.

Needless to say, a compounding agent ordinarily used in the rubber industry, for example, other polymer, carbon black, vulcanizer, vulcanizing accelerator, etc. may be compounded into the rubber composition according to the present invention in appropriate amounts.

Since the highly crystalline syndiotactic-1,2-polybutadiene resin is dispersed in the rubber composition according to the present invention, the rubber composition has a structure having the hard particulate material exposed to the surface of the rubber composition. Thus, excellent slip friction resistance can be attained even on wet roads and ice roads.

The syndiotactic-1,2-polybutadiene resin forms a tough crosslinked structure between rubber through vulcanization or the like. Therefore, even when the rubber composition according to the present invention is used for rubber articles, such as tires, to which dynamic external deformation is intermittently applied, the particulates will not substantially be peeled or slip off from the rubber as matrix, contrary to the conventional rubber compositions. Consequently, fracture resistance and wear resistance are largely improved.

For a better understanding of the invention, reference is made to the attached drawing, wherein:

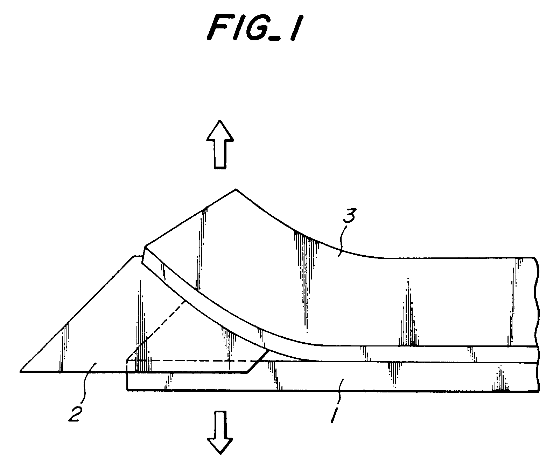

Fig. 1 is a view illustrating a peeling test for examining the co-crosslinkability between rubber and resin.

The present invention will be explained in more detail with reference to the following examples and comparative examples.

First, methods for measuring various physical properties of the examples and comparative examples will be explained.

### (1) Melting point of syndiotactic-1,2-polybutadiene resin:

The resin was heated at a heating rate of 10°C/min in a temperature range from 30°C to 250°C, and an endothermic peak was obtained by using a differential thermal analyzer DSC 200 manufactured by SEIKO ELECTRONICS CO., LTD. The melting point of the resin was determined based on the thus obtained endothermic peak.

### (2) Slip friction resistance:

### ① Dry skid resistance

Tan δ of a vulcanized rubber composition was measured at 30°C and a frequency of 10 Hz by using a spectrometer manufactured by IWAMOTO SEISAKUSHO CO., LTD. Results are indicated by an index. The greater the index, the better is the dry skid resistance.

### ② Wet skid resistance

Skid resistance on a wet road (wet skid resistance) of the rubber composition was measured at room temperature by using a skid resistance meter manufactured by STANLEY CO., LTD. Results are indicated by an index. The greater the index, the better is the wet skid resistance.

### ③ Ice skid resistance

The coefficient of friction on ice of the rubber composition, particularly the coefficient of friction on ice near 0°C in a wet state, was measured with use of a dynamic-static friction coefficient meter manufactured by KYOWA KAIMEN KAGAKU, CO., LTD. by contacting a surface of a sample (sample dimensions: 10 mm long, 10 mm wide and 5 mm thick) obtained from a slab sheet produced by ordinary vulcanization with ice having a surface temperature of -0.5°C.

The measuring conditions were a load of 5 kgf/cm², a sliding speed of 10 mm/sec, a surrounding temperature of -2°C, and the ice surface state being substantially a mirror.

### (3) Fracture resistance:

Fracture resistance of the rubber composition was measured according to JIS K 6301, and results are indicated as tensile strength by index. The greater the index, the better is the fracture resistance.

### (4) Wear resistance:

Wear resistance of the rubber composition was measured by a Lambourn abrasion tester manufactured by IWAMOTO SEISAKUSHO CO., LTD. Results are indicated by an index. The greater the index, the better is the wear resistance.

### (5) Specific gravity:

The specific gravity of the rubber composition was measured by using an automatic densitometer (AUTOMATIC DENSIMETER) manufactured by TOYO SEIKI CO., LTD.

Next, the process for producing the syndiotactic-1,2-polybutadiene resin used in the present Examples will be explained.

Dewatered benzene, 760 cc, was charged into a 2-liter autoclave in which air was replaced by nitrogen gas, and 74 g of 1,3-butadiene was dissolved into benzene. To the solution was added 1 m mol cobalt octoate (a benzene solution containing 1 m mol/cc of cobalt octoate), and 1 minute thereafter 2 m mol triethyl aluminium (benzene solution containing 1 m mol/cc triethyl aluminium) was added and stirred. One minute later, acetone was added in an amount shown in Table 1. Further, one minute later, carbon disulfide, 0.6 m mol (benzene solution containing 0.3 m mol/cc) was added into the mixture, which was stirred at 10°C for 60 minutes to effect polymerization of 1,3-butadiene.

2,4-Ditertial-butyl-p-cresol, 0.75 g, was added to the syndiotactic-1,2-polybutadiene resin-produced liquid. Then, the resulting liquid was added into 1,000 cc of methanol, thereby precipitating syndiotactic-1,2-polybutadiene resin.

The thus obtained syndiotactic-1,2-polybutadiene resin was further washed with methanol, and methanol was filtered off, followed by vacuum drying.

**Table 1**

| Kind of resin | A | B | C | D | E | F |
|---|---|---|---|---|---|---|
| Addition amount of acetone (m mol) | 2200 | 1100 | 290 | 5 | 7000 | 3700 |
| Melting point (°C) | 121 | 140 | 170 | 194 | 87 | 106 |

Next, occurrence of the co-crosslinked structure between the thus produced syndiotactic-1,2-polybutadiene resin and rubber was judged by the following method.

As shown in Fig. 1, an about 1 mm thick sheet of the syndiotactic-1,2-polybutadiene resin or nylon-6 and an about 1 mm thick unvulcanized rubber sheet obtained by kneading a rubber composition having a compounding recipe shown in Table 2 (parts by weight) were attached together through a cellophane film 2 at opposite end portions thereof, and the obtained thick sheet having a total thickness of 2 mm was subjected to vulcanization under given vulcanization conditions in a press mold.

Then, the vulcanized sheet was cut in a width of 1 cm, and subjected to a peeling test at a peeling speed of 20 mm/min as shown in Fig. 1. Results in the peeling test were judged by the following criterion.
- Not co-crosslinked: No rubber 3 was attached to the resin 1 in Fig. 1 (interface peeling).
- Co-crosslinked: Rubber 3 was clearly attached to the resin 1 (cohesion peeling).

Results are shown in Table 3.

**Table 2**

| | Parts by weight |
|---|---|
| Natural rubber | 100 |
| Carbon black N339 | 45 |
| Stearic acid | 1.0 |
| Zinc oxide | 2.0 |
| Antioxidant | 1.0 |
| Vulcanization accelerator | 1.0 |
| Sulfur | 1.5 |

**Table 3**

| Resin (melting point of crystal °C) | Syndiotactic-1,2-polybutadiene resin | | | Nylon-6 |
|---|---|---|---|---|
| | (130) | (140) | (160) | |
| Attachment of rubber to resin | attached | attached | attached | not attached |
| (Note) Vulcanizing conditions: 145°C, 30 min. | | | | |

As is seen from Table 3, it is clear that when the syndiotactic-1,2-polybutadiene resin was incorporated into the rubber composition as the particulate material and the composition was vulcanized by an ordinary method, the co-crosslinked structure was formed at the interface between the rubber component as the matrix and the particulate material. Therefore, as compared with particulate nylon-6 material having formed no co-crosslinked structure, it is understood that the syndiotactic-1,2-polybutadiene resin improves fracture strength. It can be expected that the following wear resistance is also enhanced by the improvement of the fracture strength.

### Examples 1-4 and Comparative Examples 1-3

The average particle diameter of each of the syndiotactic-1,2-polybutadiene resins, A, B, C, D, E and F shown in Table 1 was adjusted to 150 µm by an ordinary method. The average particle diameter was measured by an air jet sieve grain size 200 LS type meter manufactured by ALPINE CO., LTD. The obtained syndiotactic-1,2-polybutadiene resin was compounded according to a compounding recipe (parts by weight) shown in Table 4 to obtain a vulcanizate. Physical properties of the vulcanizate are also shown in Table 4.

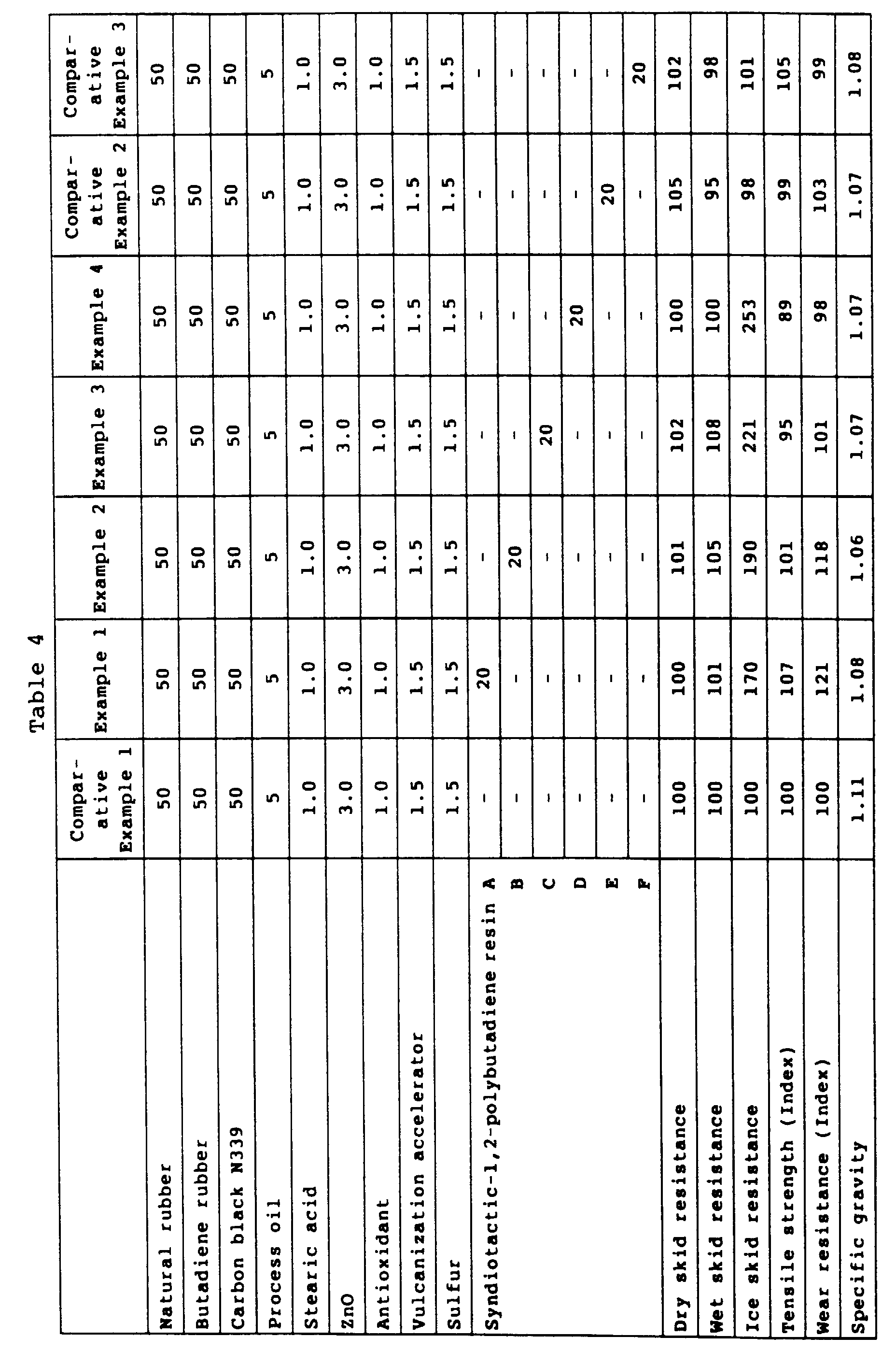

### Examples 5-8 and Comparative Examples 4-6

The average particle diameter of the syndiotactic-1,2-polybutadiene resin B shown in Table 1 was adjusted to a value shown in Table 5 by controlling a milling time by an ordinary method.

**Table 5**

| | B-1 | B-2 | B-3 | B-4 | B-5 | B-6 |
|---|---|---|---|---|---|---|
| Average particle diameter (µm) | 0.5 | 10 | 148 | 243 | 460 | 530 |

Each of the syndiotactic-1,2-polybutadiene resins shown in Table 5 was compounded according to a compounding recipe shown in Table 6 (parts by weight) to obtain a vulcanizate. Physical properties of the resulting vulcanizate are also shown in Table 6.

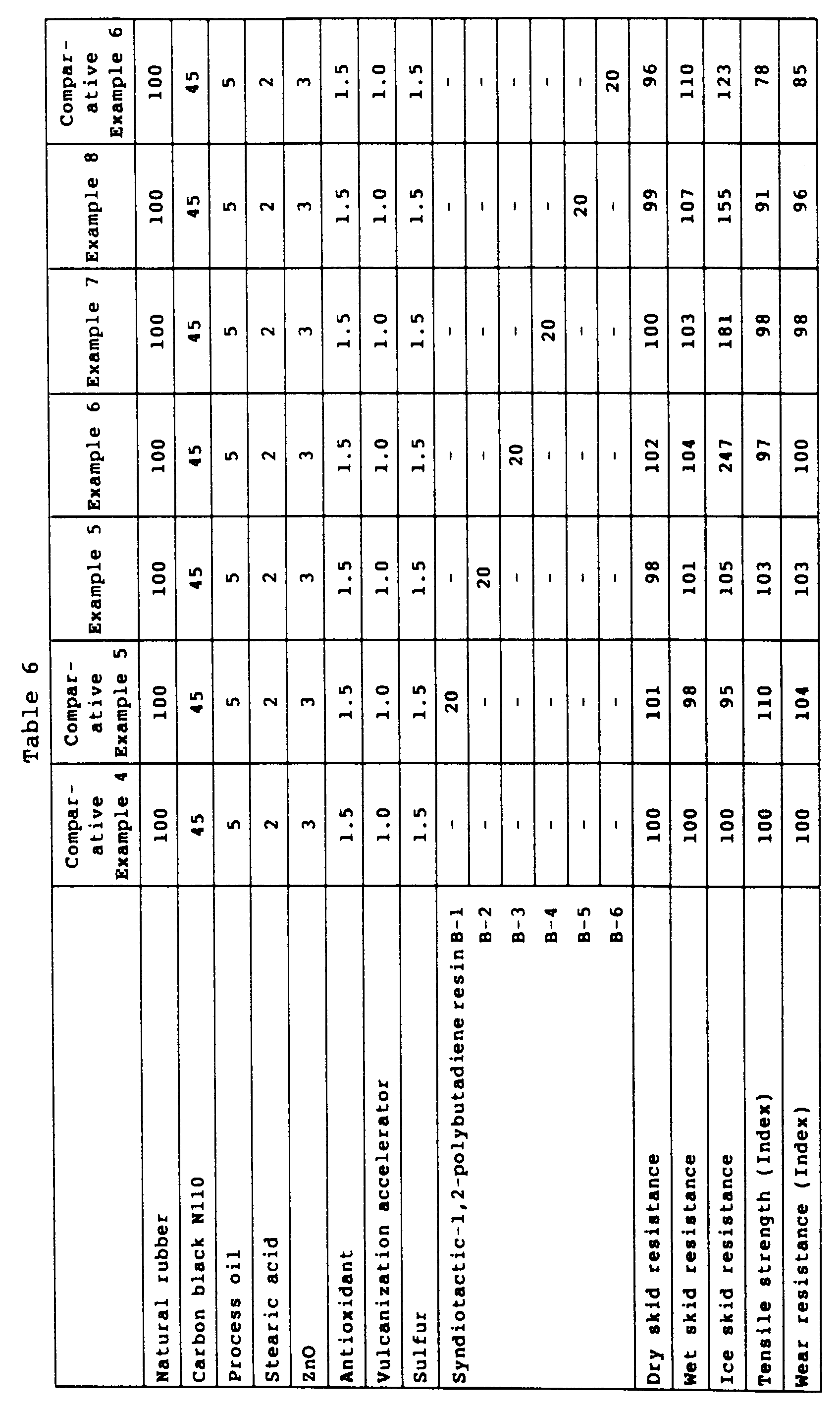

### Examples 9-11 and Comparative Examples 7-9

The syndiotactic-1,2-polybutadiene resin (B-3) shown in Table 5 was used, and compounded according to a compounding recipe shown in Table 7 (parts by weight) to obtain a vulcanizate. Physical properties of the resulting vulcanizate are also shown in Table 7.

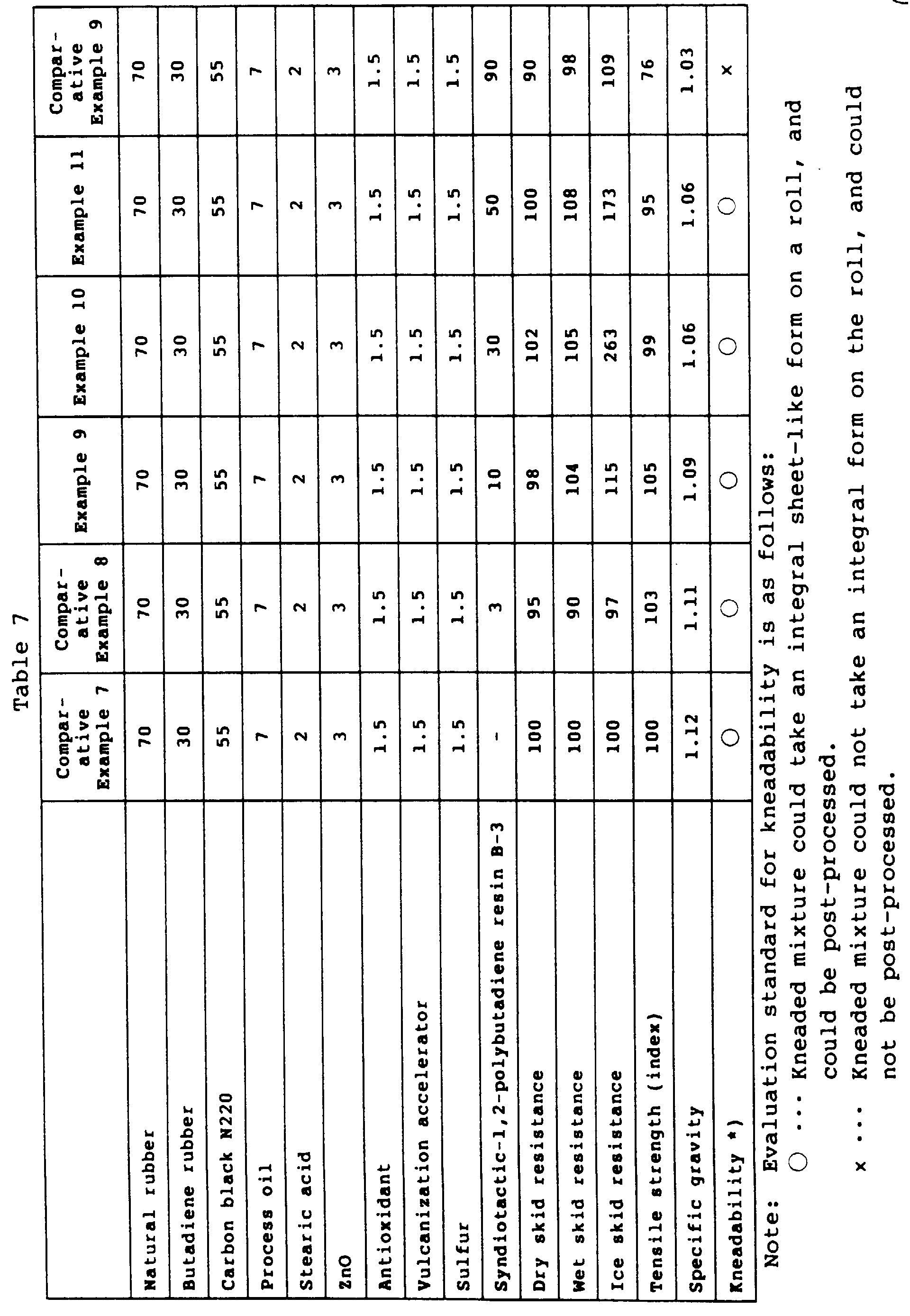

As is clear from the above-mentioned test results, according to the rubber composition of the present invention, the particulates of the syndiotactic-1,2-polybutadiene resin having the average particle diameter and the melting point as specified above are incorporated into the rubber composition at the specified compounding ratio. Thus, conspicuous improvement of the slip friction resistance can be recognized while maintaining satisfactory fracture resistance and wear resistance. Further, since the rubber composition according to the present invention has a small specific gravity, the above effects are particularly good.

## Claims

1. A rubber composition comprising a rubber component and particulates of a crystalline syndiotactic-1,2-polybutadiene resin kneaded and dispersed in said rubber component, wherein said particulates as disposed in the rubber component have an average particle diameter of 1 to 500 µm and a melting point of not less than 110°C, wherein the compounding ratio of the said resin is 5 to 60 parts by weight relative to 100 parts by weight of said rubber component, and wherein a crosslinked structure is formed between the rubber component and the resin during vulcanization, and resin particulates are exposed outside from the surface of the rubber composition.

2. A rubber composition as claimed in claim 1, characterized in that an average ratio between a major axis and a minor axis of the particulates of the resin is not more than 6.

3. A rubber composition as claimed in claim 1 or 2, characterized in that the melting point of the crystalline resin is 115°C to 200°C.

4. A rubber composition as claimed in claim 3, characterized in that the melting point of the crystalline resin is 120°C to 195°C.

5. A rubber composition as claimed in any of claims 1 to 4, characterized in that the average particle diameter of the particulates is 8 µm to 480 µm.

6. A rubber composition as claimed in claim 5, characterized in that the average particle diameter of the particulates is 100 µm to 480 µm.

7. A rubber composition as claimed in any of claims 1 to 6, characterized in that the rubber component is at least one rubber selected from natural rubber, polyisoprene rubber, polybutadiene rubber, styrene-butadiene copolymer rubber, butyl rubber, halogenated butyl rubber, and ethylene-propylene diene rubber.

## Patentansprüche

1. Kautschukzusammensetzung mit einer Kautschukkomponente und in die Kautschukkomponente eingekneteten und darin dispergierten Feststoffteilchen aus einem kristallinen syndiotaktischen 1,2-Polybutadienharz, wobei die in der Kautschukkomponente verteilten Feststoffteilchen einen mittleren Teilchendurchmesser von 1 bis 500 µm und einen Schmelzpunkt von nicht weniger als 110°C aufweisen, wobei das Mischungsverhältnis des Harzes 5 bis 60 Gewichtsteile zu 100 Gewichtsteilen der Kautschukkomponente beträgt, und wobei zwischen der Kautschukkomponente und dem Harz während der Vulkanisation eine vernetzte Struktur ausgebildet wird und Harzteilchen außerhalb der Oberfläche der Kautschukzusammensetzung freigelegt werden.

2. Kautschukzusammensetzung nach Anspruch 1, dadurch gekennzeichnet, daß ein mittleres Verhältnis zwischen einer Hauptachse und einer Nebenachse der Harzfeststoffteilchen nicht größer als 6 ist.

3. Kautschukzusamnensetzung nach Anspruch 1 oder 2, dadurch gekennzeichnet, daß der Schmelzpunkt des kristallinen Harzes 115°C bis 200°C beträgt.

4. Kautschukzusamnensetzung nach Anspruch 3, dadurch gekennzeichnet, daß der Schmelzpunkt des kristallinen Harzes 120°C bis 195°C beträgt.

5. Kautschukzusammensetzung nach einem der Ansprüche 1 bis 4, dadurch gekennzeichnet, daß der mittlere Teilchendurchmesser der Feststoffteilchen 8 µm bis 480 µm beträgt.

6. Kautschukzusammensetzung nach Anspruch 5, dadurch gekennzeichnet, daß der mittlere Teilchendurchmesser der Feststoffteilchen 100 µm bis 480 µm beträgt.

7. Kautschukzusammensetzung nach einem der Ansprüche 1 bis 6, dadurch gekennzeichnet, daß die Kautschukkomponente mindestens ein unter Naturkautschuk, Polyisoprenkautschuk, Polybutadienkautschuk, Styrol-Butadien-Mischpolymerisat-Kautschuk, Butylkautschuk, halogeniertem Butylkautschuk und Ethylen-Propylen-Dien-Kautschuk ausgewählter Kautschuk ist.

## Revendications

1. Composition de caoutchouc comprenant un composant de caoutchouc et des matières particulaires d'une résine de polybutadiène-1,2 syndiotactique cristalline malaxée et dispersée dans ledit composant de caoutchouc, lesdites matières particulaires disposées dans le composant de caoutchouc ayant un diamètre moyen des particules compris entre 1 et 500 µm et un point de fusion non inférieur à 110°C, le rapport de mélange de ladite résine représentant de 5 à 60 parties en poids pour 100 parties en poids dudit composant de caoutchouc, une structure réticulée étant formée entre le composant de caoutchouc et la résine au cours de la vulcanisation, les matières particulaires de la résine étant exposées à l'extérieur de la surface de la composition de caoutchouc.

2. Composition de caoutchouc selon la revendication 1, caractérisée en ce qu'un rapport moyen entre un grand axe et un petit axe des matières particulaires de la résine n'est pas supérieur à 6.

3. Composition de caoutchouc selon les revendications 1 ou 2, caractérisée en ce que le point de fusion de la résine cristalline est compris entre 115°C et 200°C.

4. Composition de caoutchouc selon la revendication 3, caractérisée en ce que le point de fusion de la résine cristalline est compris entre 120°C et 195°C.

5. Composition de caoutchouc selon l'une quelconque des revendications 1 à 4, caractérisée en ce que le diamètre moyen des particules des matières particulaires est compris entre 8 µm et 480 µm.

6. Composition de caoutchouc selon la revendication 5, caractérisée en ce que le diamètre moyen des particules des matières particulaires est compris entre 100 µm et 480 µm.

7. Composition de caoutchouc selon l'une quelconque des revendications 1 à 6, caractérisée en ce que le composant de caoutchouc est au moins un caoutchouc choisi parmi le caoutchouc naturel, le caoutchouc de polyisoprène, le caoutchouc de polybutadiène, le caoutchouc de copolymère styrène-butadiène, le caoutchouc butyle, le caoutchouc butyle halogéné, et le caoutchouc diène éthylène-propylène.
